# EUROPEAN PATENT SPECIFICATION

(11) **EP 3 967 476 B1**
(45) Date of publication and mention of the grant of the patent: **27.11.2024**
(21) Application number: 21194712.2
(22) Date of filing: 03.09.2021
(51) Int. Cl.: B29C 65/02, B29C 65/50, B29C 65/82, B65B 9/20, B29C 53/38, B29C 53/48, B65B 51/14, B65B 51/30, B65B 57/04, B65B 57/08, G06T 7/00

(54) **A METHOD AND A SYSTEM FOR ASSESSING QUALITY OF A LONGITUDINAL SEALING**
VERFAHREN UND SYSTEM ZUR BEURTEILUNG DER QUALITÄT EINER LÄNGSVERSIEGELUNG
PROCÉDÉ ET SYSTÈME D'ÉVALUATION DE LA QUALITÉ D'UN JOINT LONGITUDINAL

(30) Priority: 10.09.2020 EP 20195390
(43) Date of publication of application: 16.03.2022
(73) Proprietor: Tetra Laval Holdings & Finance S.A., 1009 Pully (CH)
(72) Inventor: FENU, Fabrizio, 41123 Modena (IT); BREHAS, Alessandro, 41122 Modena (IT)
(74) Representative: Tetra Pak - Patent Attorneys SE

(56) References cited:
- EP-A1- 1 555 524
- EP-A1- 2 186 624
- EP-A1- 3 438 007
- EP-A1- 3 647 024
- EP-A1- 3 757 554
- JP-A- 2008 089 437

## Description

### Technical Field

The invention relates to packaging technology. More particularly, it is related to a method for evaluating the quality of a longitudinal sealing of a food package and an apparatus thereof.

### Background Art

Today, within the food industry, an essential part of a food product is the packaging. Apart from branding of the product and presenting the customers with information the package also has an important role of ensuring the food safety. The packaging materials used in the package can be designed to provide strength and stability, so that the packages are not damaged during transportation. Furthermore, the packaging materials can form a protected environment for the food product so that it is protected from for example bacteria, germs, oxygen and sun light. However, the packaging material is not the only thing that is important in the package. The package needs also to be sealed properly. In a roll-fed system this is usually made by forming a longitudinal sealing along an overlap between two ends of the packaging material such that a tube is formed and thereafter forming packages from the tube by making transversal sealings in a lower end of the tube.

Ensuring the quality of the longitudinal sealing of a food package is not an easy task. Today, a common way of doing this is to evaluate batches of the finished products manually. This means opening finished product to assess the sealing. However this leads to waste of product and to guarantee the quality large quantities of packages must assessed. It is therefore need for an improved method for evaluating the quality of the longitudinal sealing in food packages. ***Further background art can be found in*** EP 3 647 024 A1***,*** EP 1 555 524 A1***,*** JP 2008 089437 A***,*** EP 2 186 624 A1***,*** EP 3 438 007 A1 ***and*** EP 3 757 554 A1***.***

### Summary

It is an object of the invention to at least partly overcome one or more of the above-identified limitations of the prior art. In particular, it is an object to provide a method and apparatus thereof for assessing the quality of a longitudinal sealing in a food package.

It has been realized that by analysing image data of the longitudinal sealing in the processing line, the sealing can be continuously monitored and actions can be taken at an early stage. This leads to a reduction of wasted product and the quality of each package can be assured as opposed to today's methods.

According to a first aspect it is provided a method for assessing quality of a longitudinal sealing in a roll fed packaging machine comprising
a packaging material receiver arranged to receive a web of packaging material, wherein the packaging material may comprise an outer protective layer, an inner protective layer and an intermediate strengthening layer, and wherein the web may have a first and second longitudinal side section,
a strip receiver arranged to receive a protective strip, wherein the protective strip may have a first and a second longitudinal side section,
a strip applicator arranged to form a longitudinal strip sealing by applying the protective strip on the web by heating the web and the protective strip and pressing the web and protective strip together,
a strip application camera arranged to capture strip application image data from a strip application area,
said method comprising,
receiving strip application image data of the strip application area,
extracting features from the strip application image data, wherein the features may be related to effects of the heating provided by the strip applicator,
determining a strip application status by evaluating the features, wherein the strip application status may relate to the quality of the longitudinal strip sealing,
transmitting the strip application status, thereby providing a quality assessment of the longitudinal strip sealing.

Image data may be interpreted as either still images or a sequence of still images or a video sequence.

An advantage of the proposed method may be that the quality check can be made in-line as a part of the packaging machine. The transmitted status may give indication of whether the process needs to be interrupted or adjusted due to a low quality sealing, thereby reducing the risk of wasted product.

Optionally, the method may further comprise,
receiving the web of packaging material by the packaging material receiver,
receiving the protective strip by the strip receiver,
forming the longitudinal strip sealing by the strip applicator,
capturing the strip application image data from the strip application area by the strip application camera.

The first longitudinal side section of the protective strip may be applied on the first longitudinal side section of the web, such that the second longitudinal section of the protective strip extends outside the web.

Optionally, the roll fed packaging machine may further comprise,
a tube forming device arranged to form a tube of the web, such that the second longitudinal side section of the web partly overlap the first longitudinal side section of the web, attach the first and second longitudinal side sections of the web, and form a longitudinal tube sealing by applying the protective strip on the web,
a tube forming camera arranged to capture tube forming image data from a tube forming area. Further, the method may further comprise,
receiving tube forming image data of the tube forming area,
extracting features from the tube forming image data, wherein the features may be related to effects of the heating provided by the tube forming device,
determining a tube forming status of the longitudinal tube sealing by evaluating the features, wherein the tube forming status may be related to the quality of the longitudinal tube sealing, and
transmitting the tube forming status, thereby acquiring a quality assessment of the longitudinal tube sealing.

A longitudinal sealing should be understood as a general term that may refer to either a longitudinal strip sealing, a longitudinal tube sealing or both. Similarly, a sealing status may refer to either a strip application status, a tube forming status or both.

Optionally, the method may further comprise,
forming the tube of the web of packaging material by the tube forming device,
attaching, the first and second longitudinal side sections of the web by the tube forming device,
forming the longitudinal tube sealing by the tube forming device,
capturing the tube forming image data from the tube forming area by the tube forming camera.

The second longitudinal side section of the protective strip may be applied on the second longitudinal side section of the web, such that the protective strip covers the intermediate layer of the packaging material that are exposed at the first longitudinal side section of the web.

The strip application image data and/or the tube forming image data may be captured through a polarized filter. The polarized filter(s) may be advantageous in that reflections in the surface the camera is capturing may be reduced. Furthermore, a heat pattern may be more clearly visible.

The transmitted status may be any one of the statuses underheating, normal or overheating. The status underheating may indicate that not enough heat has been provided when forming the longitudinal sealing. On the contrary, the status overheating may indicate that too much heat has been provided. The status normal may indicate that the longitudinal sealing is within acceptable quality.

The status may be transmitted to a control unit of the strip applicator and/or the tube forming device, and adjusting the heating power based on the status. This may be advantageous in that the roll fed packaging machine may adjust the heating automatically.

The status may be determined by providing the extracted features as input to an artificial intelligence model. The status may refer to the strip application status and/or the tube forming status. Artificial intelligence model should be understood as comprising e.g. machine learning models and neural networks.

Optionally, the step of extracting features from the strip application area may further comprise,
identifying an overlapping area, a heat affected protective strip area and a heat affected web area of the strip application area and including these as the features from the strip application image data.

It should be understood that other features that may be useful for defining the quality of a strip may also be used.

The effects of the heating may comprise a number of cracks in the longitudinal sealing, a size of an overlapping area and reflective properties of the longitudinal sealing.

According to a second aspect it is provided a server for assessing quality of a longitudinal sealing in a roll fed packaging machine, said server may comprise a transceiver, a memory and a control unit,
wherein the transceiver may be configured to execute
a strip application image data receiver arranged to receive strip application image data of the strip application area,
a strip application status transmitter arranged to transmit the strip application status, thereby providing a quality assessment of the longitudinal strip sealing,
wherein the memory may comprise,
a strip application image data processing module arranged to extract features from the strip application image data, wherein the features may be related to effects of the heating provided by the strip applicator,
a strip application status module arranged to determine a strip application status by evaluating the features, wherein the strip application status may relate to the quality of the longitudinal strip sealing,
wherein the control unit may be configured to execute the modules stored in the memory.

The strip application status module may determine the strip application status by providing the extracted features to an artificial intelligence model.

The transceiver may further comprise,
a tube forming image data receiver arranged to receive tube forming image data of the tube forming area,
a tube forming status transmitter arranged to transmit the tube forming status, thereby providing a quality assessment of the longitudinal tube sealing,

The memory may further comprise,
a tube forming image data processing module arranged to extract features from the tube forming image data, wherein the features may be related to effects of the heating provided by the tube forming device,
a tube forming status module arranged to determine a tube forming status of the longitudinal tube sealing by evaluating the features, wherein the tube forming status may be related to the quality of the longitudinal tube sealing.

According to a third aspect it is provided a system for assessing quality of a longitudinal sealing in a roll fed packaging machine, said system may comprise,
a server according to the second aspect,
one or more roll fed packaging machines which may comprise a packaging material receiver arranged to receive a web of packaging material, wherein the packaging material may comprise an outer protective layer, an inner protective layer and an intermediate strengthening layer, and wherein the web may have a first and second longitudinal side section,
a strip receiver arranged to receive a protective strip, wherein the protective strip may have a first and a second longitudinal side section,
a strip applicator arranged to form a longitudinal strip sealing by applying the protective strip on the web by heating the web and the protective strip and pressing the web and protective strip together,
a strip application camera arranged to capture strip application image data from a strip application area, wherein the one or more roll fed packaging machines may be communicatively connected to the server.

Optionally, the roll fed packaging machine may further comprise,
a tube forming device arranged to form a tube of the web, such that the second longitudinal side section of the web partly overlap the first longitudinal side section of the web, attach the first and second longitudinal side sections of the web, and form a longitudinal tube sealing by applying the protective strip on the web,
a tube forming camera arranged to capture tube forming image data from a tube forming area.

Having a server communicatively connected to multiple roll fed packaging machines may be advantageous in that an artificial intelligence model used for determining the statuses may be provided with more data so that it may continuously improve. Put differently, the artificial intelligence model may learn from the image data provided by multiple roll fed packaging machines.

Still other objectives, features, aspects and advantages of the invention will appear from the following detailed description as well as from the drawings. The same features and advantages described with respect to one aspect are applicable to the other aspects unless explicitly stated otherwise.

### Brief Description of the Drawings

Embodiments of the invention will now be described, by way of example, with reference to the accompanying schematic drawings, in which
Fig. 1 illustrates a simplified view of a packaging line enabled for assessing longitudinal sealing quality.
Fig. 2 is a cross-sectional view of an overlapping area of a packaging material.
Fig. 3a illustrates a protective strip and a web of packaging material in a top-view.
Fig. 3b is another illustration of the protective strip and the web of packaging material in top-view
Fig. 4 illustrates a longitudinal sealing in a tube formed by the web of packaging material.
Fig. 5a illustrates, in top view, a strip applicator applying the protective strip to the web of packaging material.
Fig. 5b illustrates, in side view, the strip applicator applying the protective strip to the web of packaging material.
Fig. 6a to fig. 6h are images of longitudinal strip sealings of different quality.
Fig. 7 is a flowchart illustrating the steps of a method for assessing quality of a longitudinal strip.
Fig. 8 is a schematic view of a server for assessing quality of a longitudinal sealing.
Fig. 9 is a schematic view of a system for assessing quality of a longitudinal sealing.

### Detailed description

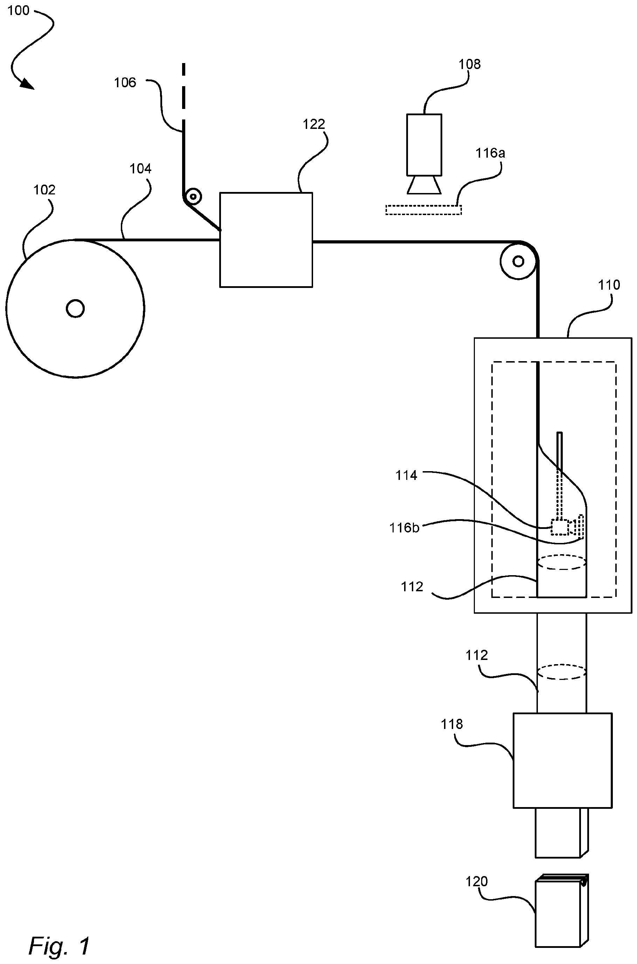

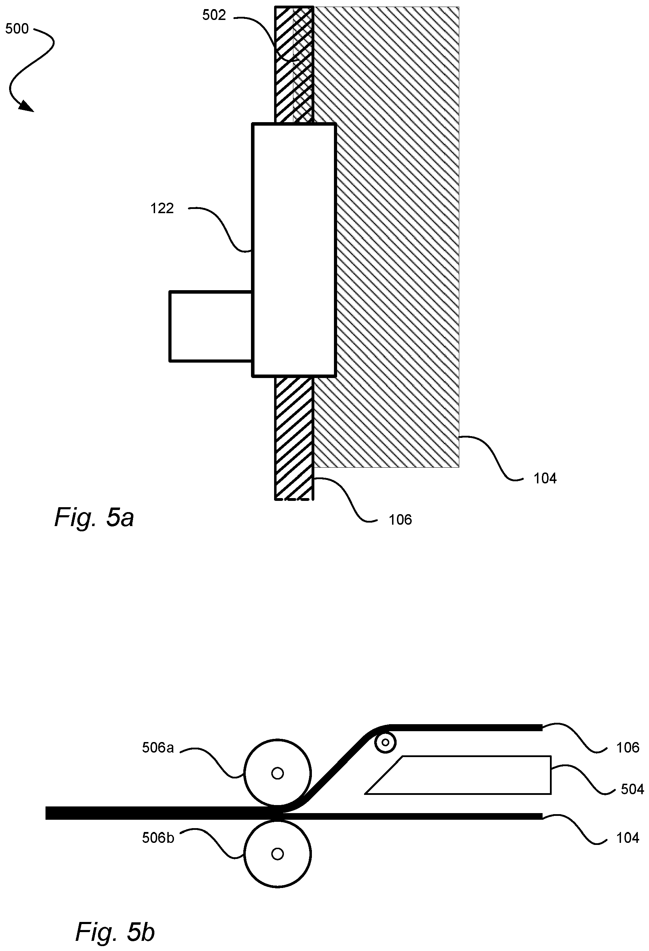

Fig. 1 illustrates a simplified view of a roll fed packaging machine 100, enabled for assessing quality of a longitudinal sealing 402, 502. The packaging material 202 can be provided on a roll of packaging material 102. A web of packaging material 104 can be provided to a strip applicator 122. The strip applicator 122 can further be provided with a protective strip 106. The strip applicator 122 can apply the protective strip 106 on the web 104 thereby forming a longitudinal strip sealing 502. The strip applicator 122 is described in more detail in connection to Fig. 5a and Fig. 5b. A strip application camera 108 can be provided to capture strip application image data from a strip application area 310. A polarized filter 116a may be provided in front of the strip application camera 108 such that the strip application image data is captured through the polarized filter 116a. The strip application image data can depict the longitudinal strip sealing 502 between the protective strip 106 and web 104. It can be in the form of a image, a sequence of images or a video sequence. From the strip application image data a status of the longitudinal strip sealing 502 can be determined. The status may relate to the quality of the seal.

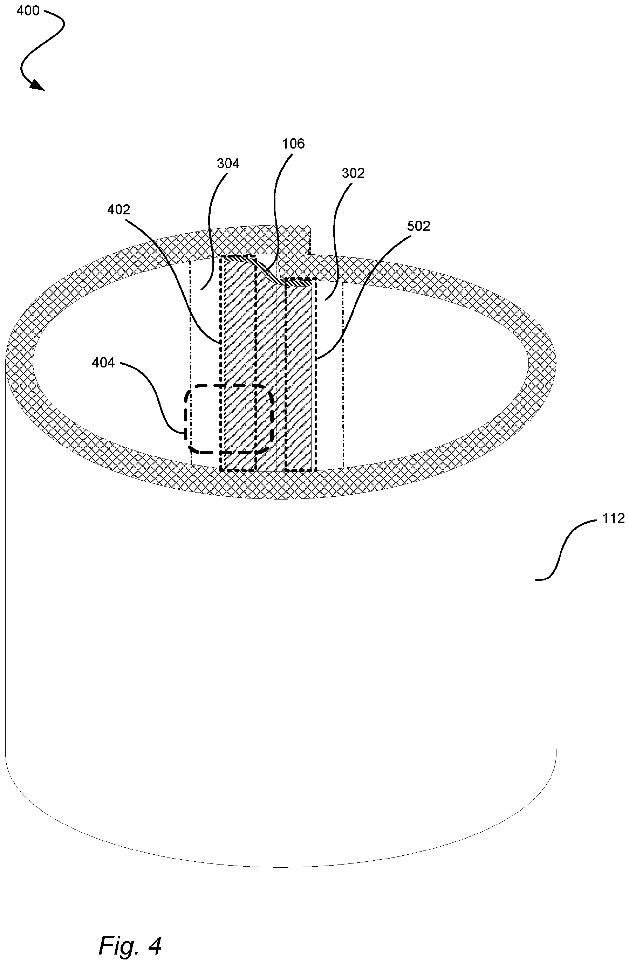

A tube forming device 110 can be provided, configured to receive the web of packaging material 104 with the protective strip 106 applied. The tube forming device 110 can be further configured to form a tube 112 of the web 104 and attaching the ends of the web together. The tube forming device 110 can be further configured form a longitudinal tube sealing 402. The longitudinal tube sealing 402 is described in more detail in connection to Fig. 4.

A tube forming camera 114 can be provided, herein illustrated inside of the tube 112. The tube forming camera 114 can capture tube forming image data of the tube forming area 310. A polarized filter 116b may be provided in front of the tube forming camera 114 such that the tube forming image data is captured through the polarized filter 116b. The tube forming image data can depict the longitudinal tube sealing 402. The tube 112 can be sent to a filling and sealing device 118.

The roll fed packaging machine 100 described above is a simplification for illustration purpose. Such a machine may be achieved by installing a strip application camera 108 and/or tube forming camera 114 into an already existing roll fed packaging machine, such as the Tetra Pak Brick System.

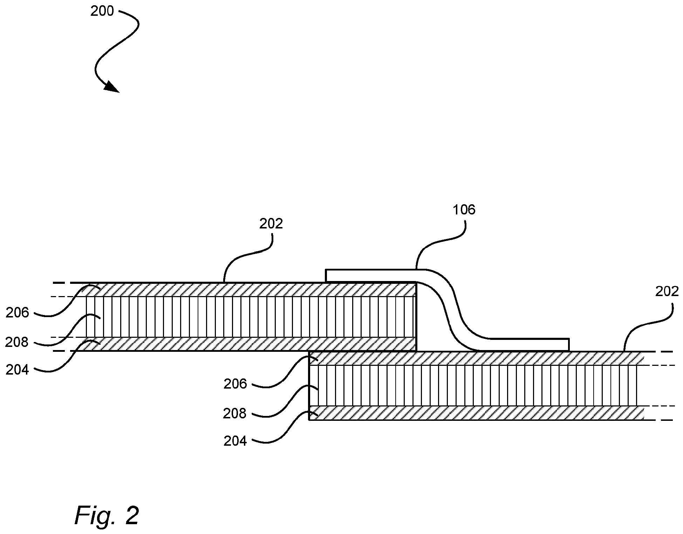

Fig. 2 is a cross-sectional view of an overlapping area of the packaging material 202 that forms the longitudinal sealing. Put differently, it illustrates, in cross-section, by way of example, a part of a rear panel of the package where the two ends of the packaging material 202 meet in order to create the tube.

The packaging material 202 may comprise of an inner protective layer 206, an outer protective layer 204 and an intermediate strengthening layer 208. The intermediate layer 208 may comprise of one or more layers of material. As an example, the intermediate layer 208 may comprise a paper board layer. The inner protective layer 206 and the outer protective layer 204 may be plastic layers. A protective strip 106 may be provided on the inside of the package, with the purpose of creating a sealing between the overlapping ends of the packaging material 202. The sealing may protect the intermediate layer 208 from coming in contact with the food product held in the food package.

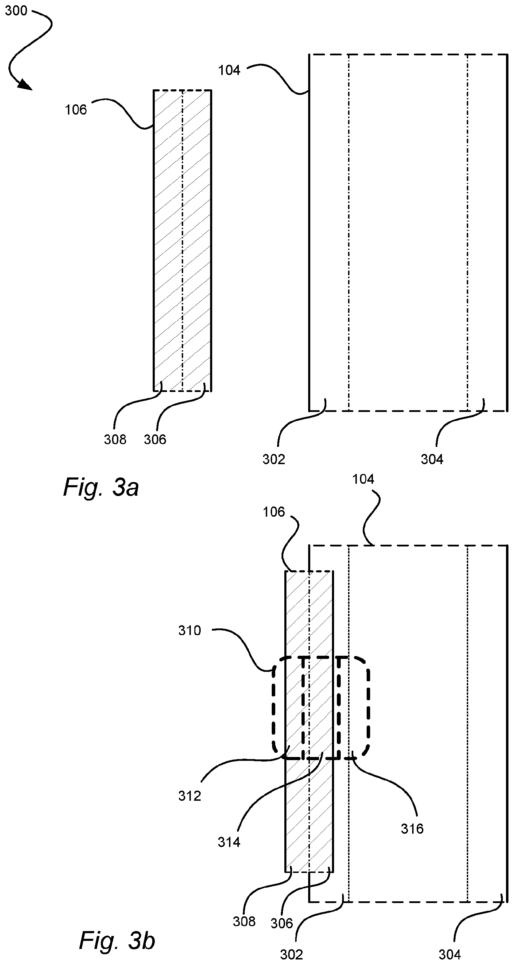

Fig. 3a illustrates, in top view, a section of the protective strip 106 and the web of packaging material 104. For reference purpose, the protective strip 106 may be divided into a first 306 and second 308 longitudinal side section. For reference purpose, the web of packaging material 104 may have a first 302 and a second 304 side section. Fig. 3b illustrates how the protective strip 106 is applied to the web of packaging material 104 by the strip applicator 122. The first side section 306 of the protective strip may be applied to the first side section 302 of the web of packaging material 104 such that the second side section 308 of the protective strip extends outside of the web of packaging material 104. The second side section 308 of the protective strip may later be applied to the second side section 304 of the web of packaging material 104. Also illustrated in Fig. 3b is a strip application area 310. The strip application area 310 may comprise an overlapping area 314, a heat affected protective strip area 312 and a heat affected web area 316. Even though illustrated to cover a part only, the strip application area 310 may in other embodiments extend along the longitudinal strip sealing 502.

Fig. 4 illustrates the longitudinal sealing 402,502 in a tube 112 formed by the web of packaging material 104. A longitudinal strip sealing 502 of the protective strip 106 is illustrated along the first side section 302 of the web. A longitudinal tube sealing 402 of the protective strip 106 is illustrated along the second side section 304 of the web. A tube forming area 404 is illustrated as covering the longitudinal tube sealing 402 as well as a section of the web 104 outside the longitudinal tube sealing 402, and a section of the protective strip 106 outside the longitudinal tube sealing 402. Even though illustrated as a circular tube, the tube 112 may be of other shapes.

Fig. 5a illustrates, in top view, a strip applicator 122 configured to form a longitudinal strip sealing 502 between a protective strip 106 and a web of packaging material 104. The web of packaging material 104 and the protective strip 106 may be fed into the strip applicator 122. The strip applicator 122 may heat the protective strip 106 and the web 104. Further, the strip applicator 122 may press the heated protective strip 106 and the heated web of packaging material 104 together, thereby forming a seal between them, also referred to as a weld. In Fig. 5b, the strip applicator 122 is illustrated in side-view. The strip applicator 122 may comprise a heating element 504 for heating the protective strip 106 and the web of packaging material 104. The strip applicator 122 may further comprise means for applying pressure to the protective strip 106 and web of packaging material 104, herein illustrated as two rolls 506a, 506b being pressed together.

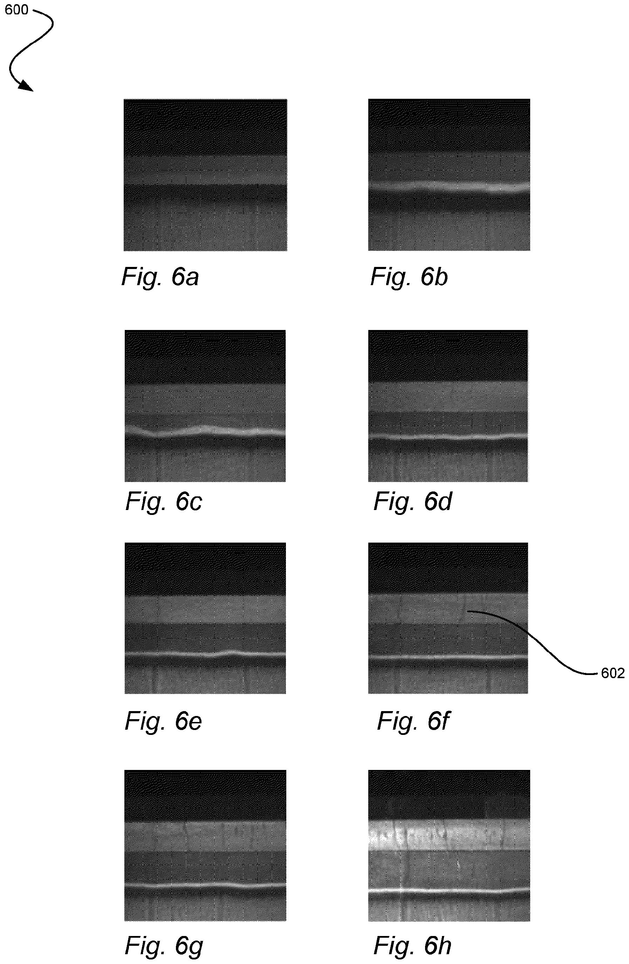

Fig. 6a to 6h are images of longitudinal strip sealings of different quality. Fig. 6a and 6b are examples of underheated longitudinal strip sealings. Fig. 6c to 6e are examples of normal longitudinal strip sealings. Fig. 6f to 6h are examples of overheated longitudinal strip sealings. Cracks 602 in the longitudinal strip sealings are visible, for instance in Fig. 6f.

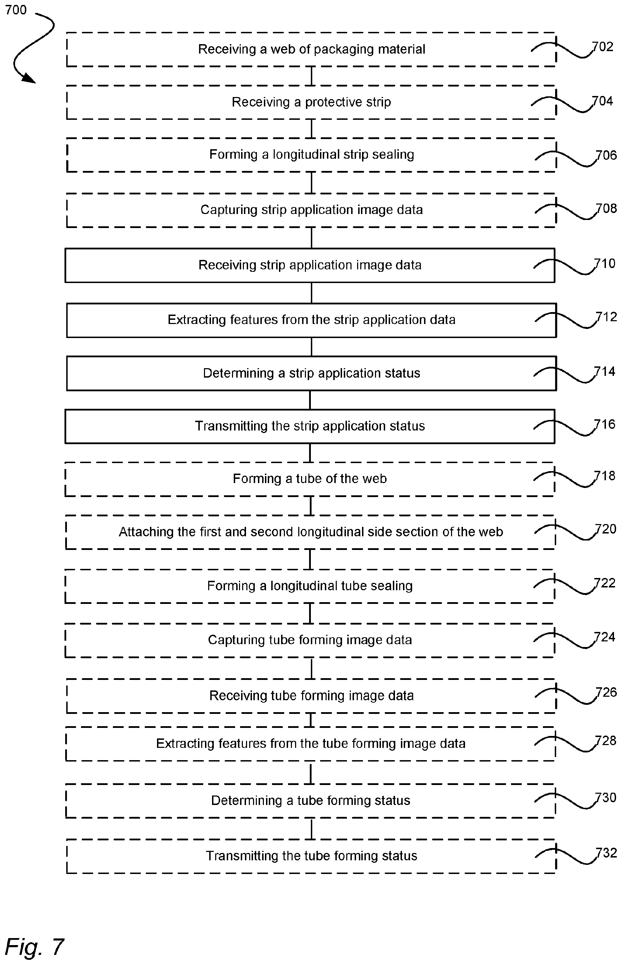

Fig. 7 is a flow chart illustrating the steps of a method 700 for assessing quality of a longitudinal sealing 402, 502.

In a first step 710, strip application image data of the strip application area 310 may be received.

In a second step 712, features from the strip application image data may be extracted, wherein the features are related to effects of the heating provided by the strip applicator 122.

In a third step 714, a strip application status may be determined by evaluating the features, wherein the strip application status relates to the quality of the longitudinal strip sealing 502.

In a fourth step 716, the strip application status may be transmitted, thereby providing a quality assessment of the longitudinal strip sealing 502.

Optionally, in a fifth step 702, the web of packaging material 104 may be received by the packaging material receiver.

Optionally, in a sixth step 704, the protective strip 106 may be received by the strip receiver.

Optionally, in a seventh step 706, the longitudinal strip sealing 502 may be formed by the strip applicator 122.

Optionally, in an eight step 708, the strip application image data may be captured from the strip application area 310 by the strip application camera 108.

Optionally, in a ninth step 726, tube forming image data of the tube forming area 404 may be received.

Optionally, in a tenth step 728, features from the tube forming image data may be extracted, wherein the features are related to effects of the heating provided by the tube forming device 110.

Optionally, in an eleventh step 730, the tube forming status of the longitudinal tube sealing 402 may be determined by evaluating the features, wherein the tube forming status is related to the quality of the longitudinal tube sealing 402.

Optionally, in a twelfth step 732, the tube forming status may be transmitted, thereby acquiring a quality assessment of the longitudinal tube sealing 402.

Optionally, in a thirteenth step 718, the tube 112 of the web of packaging material 104 may be formed by the tube forming device 110.

Optionally, in a fourteenth step 720, the first 302 and second 304 longitudinal side sections of the web may be attached by the tube forming device 110.

Optionally, in a fifteenth step 722, the longitudinal tube sealing 402 may be formed by the tube forming device 110.

Optionally, in a sixteenth step 724, the tube forming image data may be captured from the tube forming area 404 by the tube forming camera 114.

Even though described in a certain order, the different steps may also be performed in other orders.

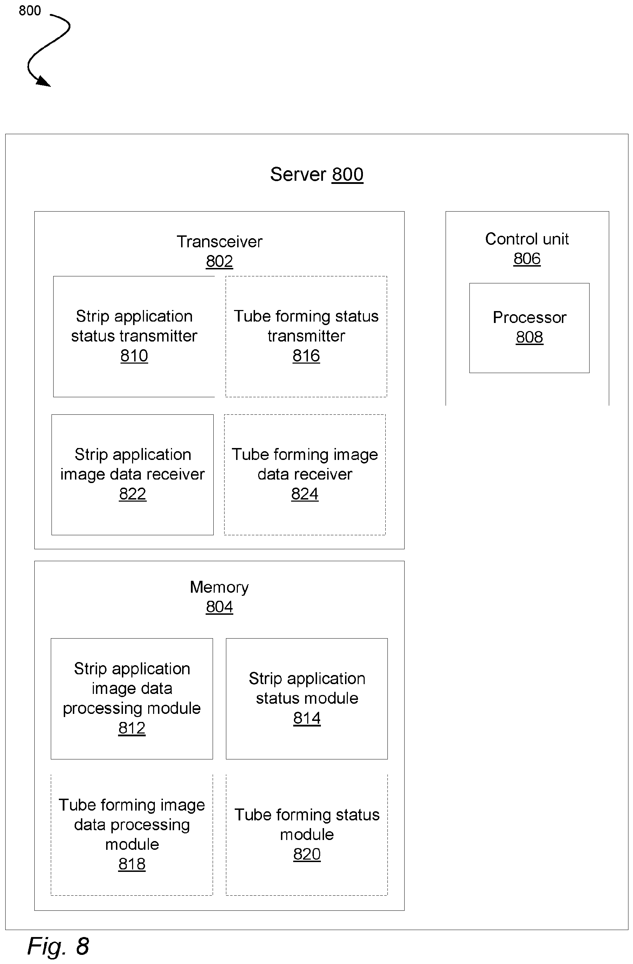

Fig. 8 illustrates a schematic view of a server 800. The server 800 may be configured for assessing quality of a longitudinal sealing 402, 502. The server 800 may comprise a transceiver 802, a control unit 806 and a memory 804.

The transceiver 802 may be configured to enable the server 800 to communicate with other devices. The transceiver 802 may execute a strip application image data receiver 822 arranged to receive strip application image data of the strip application area 310. It may further comprise a strip application status transmitter 810 arranged to transmit the strip application status, thereby providing a quality assessment of the longitudinal strip sealing 502. The status may be transmitted to the roll fed packaging machine 100.

The memory 804 may be configured to store program code or modules. The memory 804 may comprise a strip application image data processing module 812 arranged to extract features from the strip application image data, wherein the features are related to effects of the heating provided by the strip applicator 122. It may further comprise a strip application status module 814 arranged to determine a strip application status by evaluating the features, wherein the strip application status relates to the quality of the longitudinal strip sealing 502.

The control unit 806 may be configured to perform the control of the functions and operations of the server 800. The control unit 806 may include a processor 808, such as a central processing unit (CPU). The processor 808 may be configured to execute program code or modules stored in the memory 804.

The transceiver 802 may be further configured to execute a tube forming image data receiver 824 arranged to receive tube forming image data of the tube forming area 404. It may further execute a tube forming status transmitter 816 arranged to transmit the tube forming status, thereby providing a quality assessment of the longitudinal tube sealing 402. The status may be transmitted to the roll fed packaging machine 100.

The memory 804 may further comprise a tube forming image data processing module 818 arranged to extract features from the tube forming image data, wherein the features are related to effects of the heating provided by the tube forming device 110. It may further comprise a tube forming status module 820 arranged to determine a tube forming status of the longitudinal tube sealing 402 by evaluating the features, wherein the tube forming status is related to the quality of the longitudinal tube sealing 402.

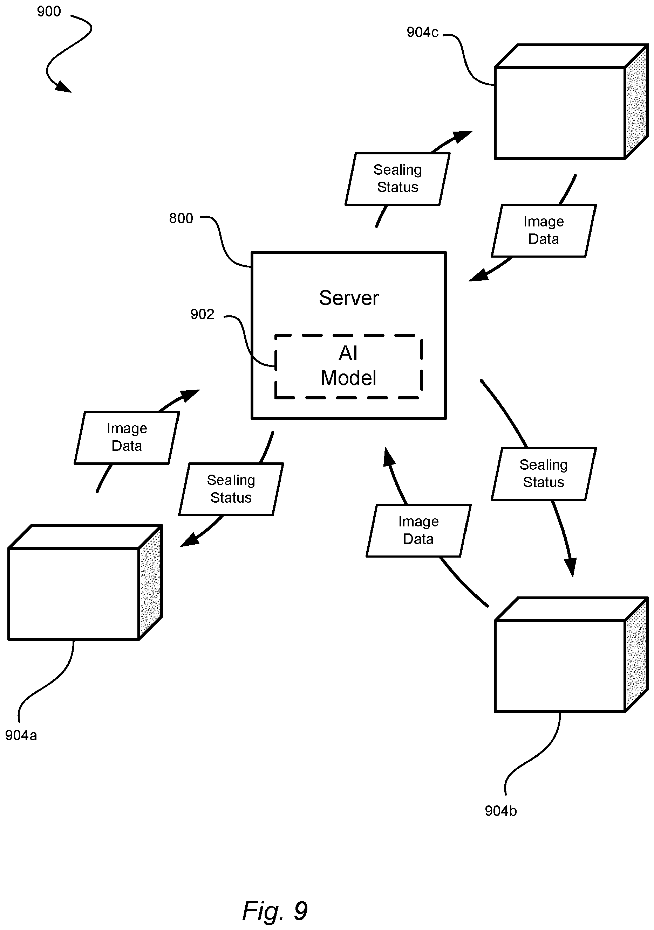

Fig. 9 illustrates a schematic view of a system 900 for assessing quality of a longitudinal sealing 402, 502. The system 900 may comprise of a server 800. The server 800 may be a server 800 as described in connection to Fig. 8. An artificial intelligence model 902 may be provided to the server 800 for determining a sealing status.

The system 900 may further comprise of one or more roll fed packaging machines 904a-c communicatively connected to the server 800. The server 800 may receive image data from the one or more roll fed packaging machines 100. As described in connection to Fig. 8, the server 800 may determine a status based on the image data and transmit the status to the roll fed packaging machine 904a-c corresponding to the image data. In addition, the server 800 may use the image data received by multiple roll fed packaging machines 904a-c to improve the artificial intelligence model 902. Put differently, the artificial intelligence model 902 may continuously learn from image data provided by the roll fed packaging machine(s) 904a-c. The server 800 may be a central server connected to a processing plant. In this case, the one or more roll fed packaging machines 904a-c may comprise the roll fed packaging machines of that processing plant. The server 800 may also be a central server connected to multiple processing plants. In this case, the one or more roll fed packaging machines 904a-c may comprise roll fed packaging machines of multiple processing plants.

The artificial intelligence model 902 may be a model designed to output a status of a longitudinal sealing 402, 502 based on extracted features from image data. The artificial intelligence model 902 may also take the image data as input and extract the features itself.

As a non-limiting example, the artificial intelligence model 902 may be an image classification neural network such as the ResNet 50 convolutional neural network. The artificial intelligence model 902 may be trained on images of longitudinal sealings labelled with statuses. For example, images such as those in Fig. 6a to Fig. 6h may be used to train the artificial intelligence model 902.

From the description above follows that, although various embodiments of the invention have been described and shown, the invention is not restricted thereto, but may also be embodied in other ways within the scope of the subject-matter defined in the following claims.

## Claims

1. A method (700) for assessing quality of a longitudinal sealing (402, 502) in a roll fed packaging machine comprising
a packaging material receiver arranged to receive a web (104) of packaging material (202), wherein the packaging material (202) comprises an outer protective layer (204), an inner protective layer (206) and an intermediate strengthening layer (208), and wherein the web (104) has a first (302) and second (304) longitudinal side section,
a strip receiver arranged to receive a protective strip (106), wherein the protective strip (106) has a first (306) and a second (308) longitudinal side section,
a strip applicator (122) arranged to form a longitudinal strip sealing (502) by applying the protective strip (106) on the web (104) by heating the web (104) and the protective strip (106) and pressing the web (104) and protective strip (106) together,
a strip application camera (108) arranged to capture strip application image data from a strip application area (310),
said method (700) comprising,
receiving (710) strip application image data of the strip application area (310),
extracting (712) features from the strip application image data, wherein the features are related to effects of the heating provided by the strip applicator (122),
determining (714) a strip application status by evaluating the features, wherein the strip application status relates to the quality of the longitudinal strip sealing (502),
transmitting (716) the strip application status, thereby providing a quality assessment of the longitudinal strip sealing (502).

2. The method (700) according to claim 1, further comprising,
receiving (702) the web (104) of packaging material by the packaging material receiver,
receiving (704) the protective strip (106) by the strip receiver,
forming (706) the longitudinal strip sealing (502) by the strip applicator (122),
capturing (708) the strip application image data from the strip application area (310) by the strip application camera (108).

3. The method (700) according to any of the preceding claims, wherein the first longitudinal side section (306) of the protective strip is applied on the first longitudinal side section (302) of the web, such that the second longitudinal section (308) of the protective strip extends outside the web (104).

4. The method (700) according to any of the preceding claims, wherein the roll fed packaging machine further comprises
a tube forming device (110) arranged to form a tube (112) of the web, such that the second longitudinal side section (304) of the web partly overlap the first longitudinal side section (302) of the web, attach the first (302) and second (304) longitudinal side sections of the web, and form a longitudinal tube sealing (402) by applying the protective strip (106) on the web (104),
a tube forming camera (114) arranged to capture tube forming image data from a tube forming area (310), wherein the method further comprises,
receiving (726) tube forming image data of the tube forming area (404),
extracting (728) features from the tube forming image data, wherein the features are related to effects of the heating provided by the tube forming device (110),
determining (730) a tube forming status of the longitudinal tube sealing (402) by evaluating the features, wherein the tube forming status is related to the quality of the longitudinal tube sealing (402), and
transmitting (732) the tube forming status, thereby acquiring a quality assessment of the longitudinal tube sealing (402).

5. The method (700) according to any of the preceding claims, further comprising,
forming (718) the tube (112) of the web of packaging material by the tube forming device,
attaching (720), the first (302) and second (304) longitudinal side sections of the web by the tube forming device,
forming (722) the longitudinal tube sealing (402) by the tube forming device,
capturing (724) the tube forming image data from the tube forming area (310) by the tube forming camera (114).

6. The method (700) according to any of the preceding claims, wherein the second longitudinal side section (308) of the protective strip is applied on the second longitudinal side section (304) of the web, such that the protective strip (106) covers the intermediate layer (208) of the packaging material that are exposed at the first longitudinal side section (302) of the web.

7. The method (700) according to any of the preceding claims, wherein the strip application image data and/or the tube forming image data is captured through a polarized filter (116a, 116b).

8. The method (700) according to any of the preceding claims, wherein the transmitted status is any one of the statuses underheating, normal or overheating.

9. The method (700) according to any of the preceding claims, wherein the status is transmitted to a control unit of the strip applicator (122) and/or the tube forming device (110), and adjusting the heating power based on the status.

10. The method (700) according to any of the preceding claims, wherein the status is determined by providing the extracted features as input to an artificial intelligence model.

11. The method (700) according to any of the preceding claims, wherein the step of extracting features (712) from the strip application area further comprises,
identifying an overlapping area (314), a heat affected protective strip area (312) and a heat affected web area (316) of the strip application area (310) and including these as the features from the strip application image data.

12. The method (700) according to any of the preceding claims, wherein the effects of the heating comprises a number of cracks in the longitudinal sealing, a size of an overlapping area (314) and reflective properties of the longitudinal sealing.

13. A system for assessing quality of a longitudinal sealing (402, 502) in a roll fed packaging machine, said system comprising,
a server (800) comprising a transceiver (802), a memory (804) and a control unit (806),
one or more roll fed packaging machines comprising a packaging material receiver arranged to receive a web (104) of packaging material (202), wherein the packaging material (202) comprises an outer protective layer (204), an inner protective layer (206) and an intermediate strengthening layer (208), and wherein the web (104) has a first (302) and second (304) longitudinal side section,
a strip receiver arranged to receive a protective strip (106), wherein the protective strip (106) has a first (306) and a second (308) longitudinal side section,
a strip applicator (122) arranged to form a longitudinal strip sealing (502) by applying the protective strip (106) on the web (104) by heating the web (104) and the protective strip (106) and pressing the web (104) and protective strip (106) together,
a strip application camera (108) arranged to capture strip application image data from a strip application area (310), wherein the one or more roll fed packaging machines are communicatively connected to the server (800),
wherein the transceiver (802) is configured to execute
a strip application image data receiver (822) arranged to receive strip application image data of the strip application area (310),
a strip application status transmitter (810) arranged to transmit the strip application status, thereby providing a quality assessment of the longitudinal strip sealing (402, 502),
wherein the memory (804) comprises
a strip application image data processing module (812) arranged to extract features from the strip application image data, wherein the features are related to effects of the heating provided by the strip applicator (122),
a strip application status module (814) arranged to determine a strip application status by evaluating the features, wherein the strip application status relates to the quality of the longitudinal strip sealing (502),
wherein the control unit (806) is configured to execute the modules stored in the memory (804).

## Patentansprüche

1. Verfahren (700) zum Beurteilen der Qualität einer Längsversiegelung (402, 502) in einer Verpackungsmaschine mit Rollenzuführung, umfassend:
eine Verpackungsmaterialaufnahme, die dazu eingerichtet ist, eine Bahn (104) aus Verpackungsmaterial (202) aufzunehmen, wobei das Verpackungsmaterial (202) eine äußere Schutzschicht (204), eine innere Schutzschicht (206) und eine dazwischenliegende Verstärkungsschicht (208) umfasst, und wobei die Bahn (104) einen ersten (302) und einen zweiten (304) Längsseitenabschnitt aufweist,
eine Streifenaufnahme, die dazu eingerichtet ist, einen Schutzstreifen (106) aufzunehmen, wobei der Schutzstreifen (106) einen ersten (306) und einen zweiten (308) Längsseitenabschnitt aufweist,
eine Streifenaufbringungsvorrichtung (122), die dazu eingerichtet ist, eine Längsstreifenversiegelung (502) durch Aufbringen des Schutzstreifens (106) auf die Bahn (104) durch Erwärmen der Bahn (104) und des Schutzstreifens (106) und Zusammendrücken der Bahn (104) und des Schutzstreifens (106) zu bilden,
eine Streifenaufbringungskamera (108), die dazu eingerichtet ist, Streifenaufbringungsbilddaten von einem Streifenaufbringungsbereich (310) zu erfassen, wobei das Verfahren (700) folgende Vorgänge umfasst:
Empfangen (710) von Streifenaufbringungsbilddaten des Streifenaufbringungsbereichs (310),
Extrahieren (712) von Merkmalen aus den Streifenaufbringungsbilddaten, wobei die Merkmale mit Wirkungen der durch die Streifenaufbringungsvorrichtung (122) bereitgestellten Erwärmung im Zusammenhang stehen, Bestimmen (714) eines Streifenaufbringungsstatus durch Auswerten der Merkmale, wobei sich der Streifenaufbringungsstatus auf die Qualität der Längsstreifenversiegelung (502) bezieht,
Senden (716) des Streifenaufbringungsstatus, wodurch eine Qualitätsbeurteilung der Längsstreifenversiegelung (502) bereitgestellt wird.

2. Verfahren (700) nach Anspruch 1, ferner umfassend:
Aufnehmen (702) der Bahn (104) aus Verpackungsmaterial durch die Verpackungsmaterialaufnahme,
Aufnehmen (704) des Schutzstreifens (106) durch die Streifenaufnahme,
Bilden (706) der Längsstreifenversiegelung (502) durch die Streifenaufbringungsvorrichtung (122),
Erfassen (708) der Streifenaufbringungsbilddaten aus dem Streifenaufbringungsbereich (310) durch die Streifenaufbringungskamera (108).

3. Verfahren (700) nach einem der vorhergehenden Ansprüche, wobei der erste Längsseitenabschnitt (306) des Schutzstreifens auf den ersten Längsseitenabschnitt (302) der Bahn aufgebracht wird, derart, dass der zweite Längsabschnitt (308) des Schutzstreifens außerhalb der Bahn (104) verläuft.

4. Verfahren (700) nach einem der vorhergehenden Ansprüche, wobei die Verpackungsmaschine mit Rollenzuführung ferner umfasst:
eine Schlauchbildungsvorrichtung (110), die dazu eingerichtet ist, einen Schlauch (112) aus der Bahn zu bilden, derart, dass der zweite Längsseitenabschnitt (304) der Bahn den ersten Längsseitenabschnitt (302) der Bahn teilweise überlappt, den ersten (302) und den zweiten (304) Längsseitenabschnitt der Bahn verbindet und eine Schlauchversiegelung (402) in Längsrichtung durch Aufbringen des Schutzstreifens (106) auf die Bahn (104) bildet,
eine Schlauchbildungskamera (114), die dazu eingerichtet ist, Schlauchbildungsbilddaten von einem Schlauchbildungsbereich (310) zu erfassen, wobei das Verfahren ferner umfasst:
Empfangen (726) von Schlauchbildungsbilddaten des Schlauchbildungsbereichs (404),
Extrahieren (728) von Merkmalen aus den Schlauchbildungsbilddaten, wobei die Merkmale mit Wirkungen der von der Schlauchbildungsvorrichtung (110) bereitgestellten Erwärmung im Zusammenhang stehen,
Bestimmen (730) eines Schlauchbildungsstatus der Schlauchversiegelung (402) in Längsrichtung durch Auswerten der Merkmale, wobei der Schlauchbildungsstatus sich auf die Qualität der Schlauchversiegelung (402) in Längsrichtung bezieht, und
Senden (732) des Schlauchbildungsstatus, wodurch eine Qualitätsbeurteilung der Schlauchversiegelung (402) in Längsrichtung erhalten wird.

5. Verfahren (700) nach einem der vorhergehenden Ansprüche, ferner umfassend:
Bilden (718) des Schlauches (112) der Bahn aus Verpackungsmaterial durch die Schlauchbildungsvorrichtung,
Verbinden (720) des ersten (302) und des zweiten (304) Längsseitenabschnitts der Bahn durch die Schlauchbildungsvorrichtung,
Bilden (722) der Schlauchversiegelung (402) in Längsrichtung durch die Schlauchbildungsvorrichtung,
Erfassen (724) der Schlauchbildungsbilddaten aus dem Schlauchbildungsbereich (310) durch die Schlauchbildungskamera (114).

6. Verfahren (700) nach einem der vorhergehenden Ansprüche, wobei der zweite Längsseitenabschnitt (308) des Schutzstreifens auf den zweiten Längsseitenabschnitt (304) der Bahn aufgebracht wird, derart, dass der Schutzstreifen (106) die am ersten Längsseitenabschnitt (302) der Bahn freiliegende Zwischenschicht (208) des Verpackungsmaterials abdeckt.

7. Verfahren (700) nach einem der vorhergehenden Ansprüche, wobei die Streifenaufbringungsbilddaten und/oder die Schlauchbildungsbilddaten durch einen Polarisationsfilter (116a, 116b) erfasst werden.

8. Verfahren (700) nach einem der vorhergehenden Ansprüche, wobei der gesendete Status ein beliebiger der Zustände Unterhitzung, Normal oder Überhitzung ist.

9. Verfahren (700) nach einem der vorhergehenden Ansprüche, wobei der Status an eine Steuereinheit der Streifenaufbringungsvorrichtung (122) und/oder der Schlauchbildungsvorrichtung (110) gesendet wird und die Erwärmungsleistung auf der Grundlage des Status eingestellt wird.

10. Verfahren (700) nach einem der vorhergehenden Ansprüche, wobei der Status bestimmt wird, indem die extrahierten Merkmale als Eingabe für ein Modell von künstlicher Intelligenz bereitgestellt werden.

11. Verfahren (700) nach einem der vorhergehenden Ansprüche, wobei der Schritt des Extrahierens von Merkmalen (712) aus dem Streifenaufbringungsbereich ferner umfasst:
Identifizieren eines Überlappungsbereichs (314), eines wärmebeeinflussten Schutzstreifenbereichs (312) und eines wärmebeeinflussten Bahnbereichs (316) des Streifenaufbringungsbereichs (310) und Einbeziehen dieser als die Merkmale aus den Streifenaufbringungsbilddaten.

12. Verfahren (700) nach einem der vorhergehenden Ansprüche, wobei die Wirkungen der Erwärmung eine Anzahl von Rissen in der Längsversiegelung, eine Größe eines Überlappungsbereichs (314) und reflektierende Eigenschaften der Längsversiegelung umfassen.

13. System zum Beurteilen der Qualität einer Längsversiegelung (402, 502) in einer Verpackungsmaschine mit Rollenzuführung, wobei das System folgende Elemente umfasst:
einen Server (800), umfassend einen Sender-Empfänger (802), einen Speicher (804) und eine Steuereinheit (806), eine oder mehrere Verpackungsmaschinen mit Rollenzuführung, umfassend eine Verpackungsmaterialaufnahme, die dazu eingerichtet ist, eine Bahn (104) aus Verpackungsmaterial (202) aufzunehmen, wobei das Verpackungsmaterial (202) eine äußere Schutzschicht (204), eine innere Schutzschicht (206) und eine dazwischenliegende Verstärkungsschicht (208) umfasst, und wobei die Bahn (104) einen ersten (302) und einen zweiten (304) Längsseitenabschnitt aufweist,
eine Streifenaufnahme, die dazu eingerichtet ist, einen Schutzstreifen (106) aufzunehmen, wobei der Schutzstreifen (106) einen ersten (306) und einen zweiten (308) Längsseitenabschnitt aufweist,
eine Streifenaufbringungsvorrichtung (122), die dazu eingerichtet ist, eine Längsstreifenversiegelung (502) durch Aufbringen des Schutzstreifens (106) auf die Bahn (104) durch Erwärmen der Bahn (104) und des Schutzstreifens (106) und Zusammendrücken der Bahn (104) und des Schutzstreifens (106) zu bilden,
eine Streifenaufbringungskamera (108), die dazu eingerichtet ist, Streifenaufbringungsbilddaten von einem Streifenaufbringungsbereich (310) zu erfassen, wobei die eine oder die mehreren Verpackungsmaschinen mit Rollenzuführung kommunikativ mit dem Server (800) verbunden sind,
wobei der Sender-Empfänger (802) dafür ausgelegt ist, folgende Elemente auszuführen:
einen Streifenaufbringungsbilddatenempfänger (822), der dazu eingerichtet ist, Streifenaufbringungsbilddaten des Streifenaufbringungsbereichs (310) zu empfangen,
einen Streifenaufbringungsstatussender (810), der dazu eingerichtet ist, den Streifenaufbringungsstatus zu senden und dadurch eine Qualitätsbeurteilung der Längsstreifenversiegelung (402, 502) bereitzustellen,
wobei der Speicher (804) umfasst:
ein Streifenaufbringungsbilddatenverarbeitungsmodul (812), das dazu eingerichtet ist, Merkmale aus den Streifenaufbringungsbilddaten zu extrahieren, wobei die Merkmale mit Wirkungen der durch die Streifenaufbringungsvorrichtung (122) bereitgestellten Erwärmung im Zusammenhang stehen,
ein Streifenaufbringungsstatusmodul (814), das dazu eingerichtet ist, einen Streifenaufbringungsstatus durch Auswerten der Merkmale zu bestimmen, wobei sich der Streifenaufbringungsstatus auf die Qualität der Längsstreifenversiegelung (502) bezieht,
wobei die Steuereinheit (806) dafür ausgelegt ist, die im Speicher (804) gespeicherten Module auszuführen.

## Revendications

1. Procédé (700) d'évaluation de la qualité d'un joint longitudinal (402, 502) dans une machine d'emballage alimentée par rouleaux comprenant
un récepteur de matériau d'emballage conçu pour recevoir une nappe (104) de matériau d'emballage (202), où le matériau d'emballage (202) comprend une couche de protection extérieure (204), une couche de protection intérieure (206) et une couche de renforcement intermédiaire (208), et où la nappe (104) présente une première (302) et une deuxième (304) sections latérales longitudinales,
un récepteur de bande conçu pour recevoir une bande de protection (106), où la bande de protection (106) présente des première (306) et deuxième (308) sections latérales longitudinales,
un applicateur de bande (122) conçu pour former un scellement longitudinal de bande (502) en appliquant la bande de protection (106) sur la nappe (104) en chauffant la nappe (104) et la bande de protection (106) et en pressant la nappe (104) et la bande de protection (106) l'une contre l'autre,
une caméra d'application de bande (108) conçue pour capturer des données d'image d'application de bande à partir d'une zone d'application de bande (310),
ledit procédé (700) comprenant les étapes suivantes recevoir (710) des données d'image d'application de bande de la zone d'application de bande (310),
extraire (712) des caractéristiques des données d'image d'application de bande, où les caractéristiques sont liées aux effets du chauffage fourni par l'applicateur de bande (122),
déterminer (714) un état d'application de la bande en évaluant les caractéristiques, l'état d'application de la bande étant lié à la qualité du scellement de la bande longitudinale (502),
transmettre (716) l'état d'application de la bande, en fournissant ainsi une évaluation de la qualité du scellement de la bande longitudinale (502).

2. Procédé (700) selon la revendication 1, comprenant en outre les étapes suivantes
recevoir (702) la nappe (104) de matériau d'emballage par le récepteur de matériau d'emballage,
recevoir (704) la bande de protection (106) par le récepteur de bande,
former (706) le scellement longitudinal de la bande (502) par l'applicateur de bande (122),
capturer (708) les données d'image de l'application de bande à partir de la zone d'application de bande (310) par la caméra d'application de bande (108).

3. Procédé (700) selon l'une quelconque des revendications précédentes, dans lequel la première section latérale longitudinale (306) de la bande de protection est appliquée sur la première section latérale longitudinale (302) de la nappe, de sorte que la deuxième section longitudinale (308) de la bande de protection s'étende à l'extérieur de la nappe (104).

4. Procédé (700) selon l'une quelconque des revendications précédentes, dans lequel la machine d'emballage alimentée par rouleaux comprend en outre
un dispositif de formation de tube (110) conçu pour former un tube (112) de la nappe, de sorte que la deuxième section latérale longitudinale (304) de la nappe recouvre partiellement la première section latérale longitudinale (302) de la nappe, attache les première (302) et deuxième (304) sections latérales longitudinales de la nappe, et forme un scellement longitudinal de tube (402) en appliquant la bande de protection (106) sur la nappe (104),
une caméra de formation de tube (114) agencée pour capturer des données d'image de formation de tube à partir d'une zone de formation de tube (310), où le procédé comprend en outre les étapes suivantes
recevoir (726) des données d'image de formation de tube de la zone de formation de tube (404),
extraire (728) des caractéristiques des données d'image de formation de tube, les caractéristiques étant liées aux effets du chauffage fourni par le dispositif de formation de tube (110),
déterminer (730) un état de formation de tube du scellement longitudinal de tube (402) en évaluant les caractéristiques, l'état de formation du tube étant lié à la qualité du scellement longitudinal du tube (402),
et
transmettre (732) l'état de formation du tube, ce qui permet d'obtenir une évaluation de la qualité du scellement longitudinal du tube (402).

5. Procédé (700) selon l'une quelconque des revendications précédentes, comprenant en outre les étapes suivantes
former (718) le tube (112) de la nappe de matériau d'emballage par le dispositif de formation de tube,
attacher (720) les première (302) et deuxième (304) sections latérales longitudinales de la nappe par le dispositif de formation de tube,
former (722) le scellement longitudinal du tube (402) par le dispositif de formation de tube,
capturer (724) les données d'image de formation de tube depuis la zone de formation de tube (310) par la caméra de formation de tube (114).

6. Procédé (700) selon l'une quelconque des revendications précédentes, dans lequel la deuxième section latérale longitudinale (308) de la bande de protection est appliquée sur la deuxième section latérale longitudinale (304) de la nappe, de sorte que la bande de protection (106) recouvre la couche intermédiaire (208) du matériau d'emballage qui est exposée au niveau de la première section latérale longitudinale (302) de la nappe.

7. Procédé (700) selon l'une quelconque des revendications précédentes, dans lequel les données d'image d'application de bande et/ou les données d'image de formation de tube sont capturées à travers un filtre polarisé (116a, 116b).

8. Procédé (700) selon l'une quelconque des revendications précédentes, dans lequel l'état transmis est l'un quelconque des états suivants sous-chauffe, normal ou surchauffe.

9. Procédé (700) selon l'une quelconque des revendications précédentes, dans lequel l'état est transmis à une unité de commande de l'applicateur de bande (122) et/ou du dispositif de formation de tube (110), et le réglage de la puissance de chauffage en fonction de l'état.

10. Procédé (700) selon l'une quelconque des revendications précédentes, dans lequel l'état est déterminé en fournissant les caractéristiques extraites comme entrée à un modèle d'intelligence artificielle.

11. Procédé (700) selon l'une quelconque des revendications précédentes, dans lequel l'étape d'extraction de caractéristiques (712) à partir de la zone d'application de la bande comprend en outre l'identification d'une zone de chevauchement (314), d'une zone de bande protectrice affectée par la chaleur (312) et d'une zone de bande affectée par la chaleur (316) de la zone d'application de bande (310) et l'inclusion de celles-ci comme caractéristiques issues des données d'image d'application de bande.

12. Procédé (700) selon l'une quelconque des revendications précédentes, dans lequel les effets du chauffage comprennent un nombre de fissures dans le scellement longitudinal, une taille d'une zone de chevauchement (314) et des propriétés de réflexion du scellement longitudinal.

13. Système d'évaluation de la qualité d'un scellement longitudinal (402, 502) dans une machine d'emballage alimentée par rouleaux, ledit système comprenant
un serveur (800) comprenant un émetteur-récepteur (802), une mémoire (804) et une unité de commande (806),
une ou plusieurs machines d'emballage alimentées par rouleaux comprenant un récepteur de matériau d'emballage conçu pour recevoir une nappe (104) de matériau d'emballage (202), où le matériau d'emballage (202) comprend une couche de protection extérieure (204), une couche de protection intérieure (206) et une couche de renforcement intermédiaire (208), et où la nappe (104) présente des première (302) et deuxième (304) sections latérales longitudinales,
un récepteur de bande conçu pour recevoir une bande de protection (106), où la bande de protection (106) présente des première (306) et deuxième (308) sections latérales longitudinales,
un applicateur de bande (122) conçu pour former un scellement longitudinal de bande (502) en appliquant la bande de protection (106) sur la nappe (104) en chauffant la nappe (104) et la bande de protection (106) et en pressant la nappe (104) et la bande de protection (106) l'une contre l'autre,
une caméra d'application de bande (108) conçue pour capturer des données d'image d'application de bande à partir d'une zone d'application de bande (310), où les une ou plusieurs machines d'emballage alimentées par rouleaux sont connectées de manière communicative au serveur (800),
dans lequel l'émetteur-récepteur (802) est configuré pour exécuter
un récepteur de données d'image d'application de bande (822) conçu pour recevoir des données d'image d'application de bande de la zone d'application de bande (310),
un émetteur d'état d'application de bande (810) conçu pour transmettre l'état d'application de la bande, en fournissant ainsi une évaluation de la qualité du scellement longitudinal de la bande (402, 502),
dans lequel la mémoire (804) comprend
un module de traitement des données d'image d'application de bande (812) conçu pour extraire des caractéristiques des données d'image d'application de bande, les caractéristiques étant liées aux effets du chauffage fourni par l'applicateur de bande (122),
un module d'état d'application de bande (814) conçu pour déterminer un état d'application de la bande en évaluant les caractéristiques, l'état d'application de la bande étant lié à la qualité du scellement longitudinal de la bande (502),
dans lequel l'unité de commande (806) est configurée pour exécuter les modules stockés dans la mémoire (804).
